# EUROPEAN PATENT SPECIFICATION

(11) **EP 2 184 967 B1**
(45) Date of publication and mention of the grant of the patent: **07.08.2019**
(21) Application number: 08803067.1
(22) Date of filing: 15.08.2008
(51) Int. Cl.: A01G 7/04, F21V 29/56, F21Y 115/10

(54) **LED LIGHTING DEVICE FOR GROWING PLANTS**
LED BELEUCHTUNGSVORRICHTUNG FÜR PFLANZENBAU
LAMPE À DEL POUR LA PRODUCTION VÉGÉTALE

(30) Priority: 15.08.2007 EP 07114397
(43) Date of publication of application: 19.05.2010
(73) Proprietor: Oreon Holding B.V., 3401 MX IJsselstein (NL)
(72) Inventor: ROOYMANS, Johannes Otto, 3401 MX IJsselstein (NL)
(74) Representative: V.O.
(86) International application number: PCT/EP2008/060776
(87) International publication number: WO 2009/022016

(56) References cited:
- EP-A- 1 479 286
- WO-A-03/055273
- WO-A2-03/096387
- DE-U1-202004 009 616
- JP-A- 2000 135 030
- US-A- 5 659 977
- US-A1- 2001 047 618
- US-A1- 2003 052 584
- US-A1- 2004 230 102
- US-A1- 2005 254 264
- US-A1- 2006 138 971
- US-A1- 2006 176 686
- US-A1- 2007 058 368
- US-B2- 6 762 562
- US-B2- 7 220 018

## Description

### BACKGROUND OF THE INVENTION

### 1. Field of the Invention

The invention relates generally to an enclosure for growing plants comprising a lighting assembly, and more particularly to a specific method for growing plants.

### 2. Description of the Related Art

Conventionally, greenhouses are provided with sodium or metal hydride lamps to provide growing light for plants on days that daylight entering the greenhouse is insufficient for optimal plant growth. The energy required for such lamps is a major cost factor in the growing of crops in greenhouses. The high energy consumption in most cases is associated with an undesirable burning of fossil fuels. In addition, the light escaping from the greenhouses is a major source of undesirable light pollution.

US Patent 6,921,182 to Anderson proposes a lamp comprising LEDs for facilitating plant growing. The lamp comprises a first set of orange LEDs having a peak wavelength emission of about 612 nm, and a second set of red LEDs having a peak wavelength of about 660 nm. In a preferred embodiment the lamp includes a third set of LEDs emitting blue light. The lamp of this reference is intended to provide the plants with their full lighting needs. In US20070058368 a unit is disclosed that provides artificial light to promote plant growth. The unit utilizes red and blue light emitting diodes (LEDs). Also in DE202004009616U1 a lighting system is disclosed to promote the growth of biological systems.

Thus, there is a need for a lighting assembly for use in growing plants that supplements daylight to which the plants are exposed. There is a further need to optimize the spectral distribution of the light provided to the plants complementing the daylight the plants receive.

### BRIEF SUMMARY OF THE INVENTION

The present invention addresses these needs by providing an enclosure for growing plants according to claim 1.

More in particular, the invention provides an enclosure for growing plants, said enclosure comprising:
a) a transparent panel for admitting daylight into the enclosure and a plurality of lighting assemblies for growing plants, wherein each lighting assembly comprises:
b) a first light source provided inside the enclosure for supplementing the daylight admitted into the enclosure, said light source emitting light predominantly in a wavelength range of from 600 nm to 750 nm;
c) a second light source inside the enclosure, said second light source emitting light predominantly in a second wavelength range of 375 to 500 nm; and
d) a controller for controlling the output of the second light source independent from the output of the first light source; and
e) means for cooling at least the first light source, wherein said means for cooling comprise a tube, and a cooling liquid fluid flowing through the tube, wherein said plurality of said light assemblies is arranged in a two-dimensional grid.

Another aspect of the invention provides an enclosure for growing aquatic plants, such as algae, comprising water and a plurality of light assemblies as mentioned above, the light assemblies being submerged in the water.

Another aspect of the invention provides a method according to claim 7 of growing plants in the enclosure, the method comprising:
- exposing the plants to daylight, to light emitted by a first light source predominantly in a wavelength range from 600 to 750 nm, and to light from a second light source emitting light predominantly in a wavelength range from 375 to 500 nm;
- controlling the output of the second light source independent from the output of the first light source.

### BRIEF DESCRIPTION OF THE DRAWINGS

The features and advantages of the invention will be appreciated upon reference to the following drawings, in which:
FIG. 1 shows an absorption spectrum of a green plant;
FIG. 2 shows a typical emission spectrum of a sodium lamp;
FIG. 3 schematically shows a lighting assembly for growing plants according to a first aspect of the invention;
FIG. 4 shows the relative light output of a LED as a function of its junction temperature;
FIG. 5 schematically shows a particular embodiment of cooling means as used in embodiments of the invention;
FIG. 6 shows an embodiment of a circuit of a LED assembly as used in embodiments of the invention;
FIG. 7 shows an arrangement of lighting assemblies in a greenhouse;
FIG. 8 shows a grid of lighting assemblies suitable for a greenhouse;
FIG. 9 shows the light intensity pattern produced with the grid of FIG. 8;
FIG. 10 schematically shows an enclosure comprising a light assembly not in accordance with the claimed invention.

### DESCRIPTION OF ILLUSTRATIVE EMBODIMENTS

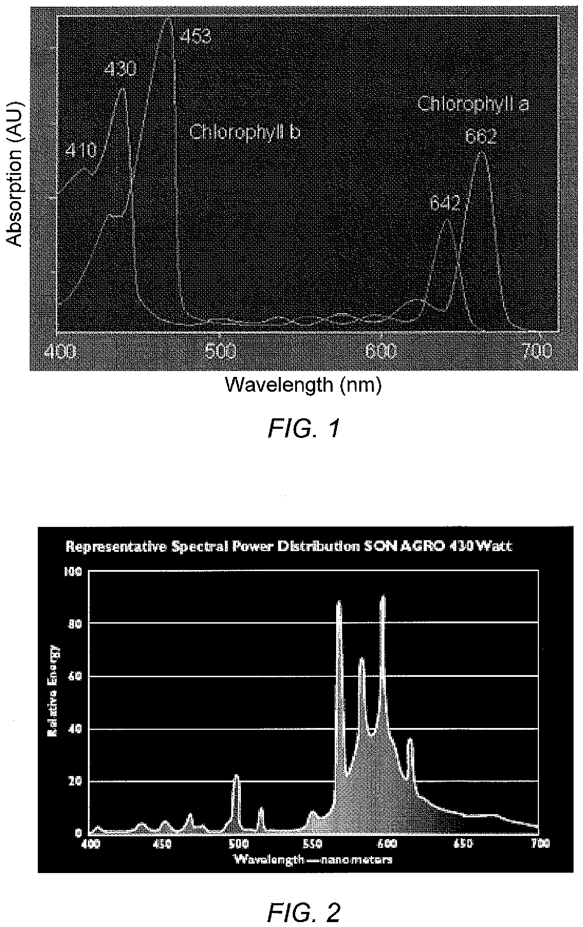

FIG. 1 shows an absorption spectrum of a green plant. Assimilation by plants is a process by which plants absorb CO₂ from air, and combine it with water to form carbohydrates. This is en endothermic reaction. Plants use energy from the sun for this reaction. The pigment chlorophyll is instrumental in converting light energy.

There are two main types of chlorophyll, chlorophyll a and chlorophyll b. The absorption maxima of chlorophyll a are at 430 nm and at 662 nm. The absorption maxima of chlorophyll b are at 453 nm and 642 nm. The absorption spectra of both chlorophylls are shown in FIG. 1. It is clear that there is little or no absorption of light with wavelengths in the 500 to 600 nm range.

FIG. 2 shows an emission spectrum of a representative high pressure sodium (HPS) plant growth lamp [source: Philips]. The lion share of the energy is emitted at wavelengths between 500 and 600 nm, which is not usable by the chlorophyll in the plants.

Generally, PAR (photosynthetically active radiation) is used to measure light performance in Watts of light energy per square meter (W/m²). In PAR, all radiation in the 400 to 700 nm range is considered. Although widely used, PAR-measurements may lead to misleading results, as only a portion of the energy can be used by the plant. It were better to measure the Watts of light energy (per square meter) in the wavelength ranges of 400 to 470 nm and 630 to 700 nm (or alternatively 620 to 690 nm), as these wavelengths correspond with chlorophyll absorption as schematically depicted in FIG. 1. This applicant has coined the term LEMPAR™ for this parameter. For many light sources the LEMPAR™ is about a third of the PAR.

It will be understood that the energy efficiency of a growth light can be improved by adjusting its emission spectrum so as to maximize its emission in the 400-470 nm and 630 to 700 nm ranges, so that PAR and LEMPAR™ approach equality.

The energy efficiency of a growth light can be improved further by providing a proper balance between its emission of "blue" light (400 - 470 nm) and its "red" light (630 - 700 nm). It has been discovered that the red light promotes plant growth, whereas the blue light slows down plant growth, but promotes the formation of buds, firm branches and compact leaves. It is therefore important to adjust the amount of blue light. Too little blue light results in spindly plants; too much blue light stunts the growth of the plant.

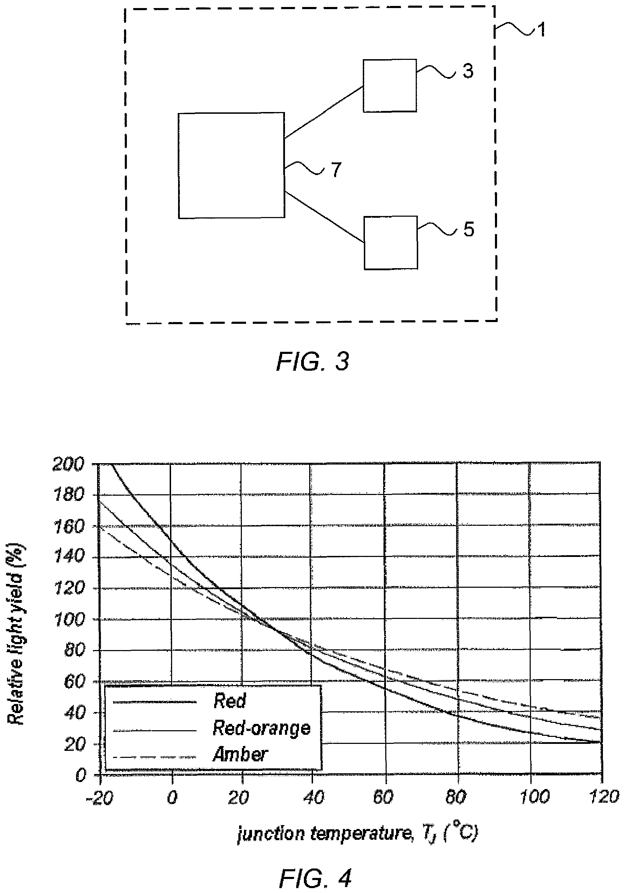

In one aspect, as schematically shown in FIG. 3, the invention provides a lighting assembly **1** for growing plants as part of the enclosure, said lighting assembly comprising:
a) a first light source **3** emitting light predominantly in a first wavelength range of 600 to 750 nm;
b) a second light source **5** emitting light predominantly in a second wavelength range of 375 to 500 nm;
c) a controller **7** for controlling the output of the first light source independent from the output of the second light source.

The independent control of the light outputs of the first light source **3** and the second light source **5** permits a proper balancing of the amount of blue light, consistent with the desired result. The optimum balance will depend the growth phase of the plant (germination, seedling, mature plant) and on the type of crop, for example, on whether the plant is grown for its leaves (spinach, lettuce, etc.), for its flowers (roses, chrysanthemums, etc.) or for its fruits (tomatoes, bell peppers, etc.).

Furthermore, plants sense the seasons by the spectral power distribution between blue and red. Additionally, the day/night rhythm of a plant may be affected by spectral distribution. The independent control of the light sources **3, 5** may be used to control spectral distribution in order to influence and optimize plant growth and/or bud growth.

Particularly suitable for the light sources of the lighting assembly are light sources comprising Light Emitting Diodes (LEDs). LEDs emit light in a relatively narrow wavelength range, which is an advantage in the present context.

Examples of suitable LEDs for use as the first light source include Gallium Phosphide (GaP), Gallium Arsenide (GaAs) and Aluminum Indium Gallium Phosphide (AllnGaP). The former two have their peak wavelengths near 660 nm, which is about optimum for chlorophyll a. AlInGaP has its peak below 645 nm, but its efficacy is much higher than that of GaP and GaAs. In many cases AlInGaP is therefore preferred.

Examples of suitable blue and near uv LEDs include Gallium Nitride (GaN) and Indium Gallium Nitride (InGaN) chips.

As shown in FIG. 4, the light output of LEDs, e.g. a red LED (dotted line), an amber LED (solid black line) or a orange-red LED (solid grey line), is strongly dependent of the junction temperature. If the output at a junction temperature of 20 °C is put at 100, the output at a junction temperature of 60 °C is only about 50. The power consumption of the LED is about the same at both temperatures. For this reason it is desirable to cool the LED light source. Cooling is a unique feature of LED light sources. Traditional light sources, such as incandescent lamps and tube lights, require a high operating temperature for them to emit light. Cooling would be counterproductive (although of course the housing or fitting of such a light source may be cooled, and often is). In the case of LEDs, by contrast, it is advantageous to cool the light source itself, in particular the junction.

Any means for cooling the LED chip is suitable. Examples include means for circulating air or some other gas around the LED chip. A heat sink may be provided to further facilitate the cooling.

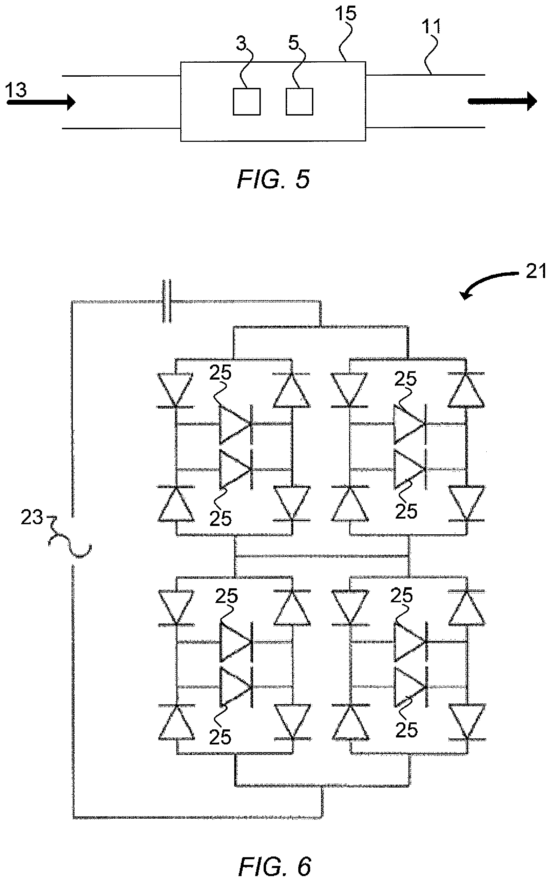

In the invention, as schematically shown in FIG. 5, the cooling means comprises a tube **11,** and a cooling liquid **13** flowing through the tube. It may be desirable to provide a transparent housing **15,** for example a tube, so that at least one of the light sources **3, 5** may be placed inside the housing **15.**

As will be described in more detail below, the plant may be exposed to daylight, and the lighting assembly may be used to complement this daylight. In this application it is desirable to minimize the size of the lighting assembly, so as to minimize the amount of daylight that is blocked by it. Even transparent tubes block some daylight, and are therefore preferably kept small. The tube of the cooling means desirably has an external diameter of less than 5 cm, preferably less than 3 cm, more preferably less than 2 cm.

FIG. 6 shows a bridge circuit **21** comprising eight diodes **25,** all or some of which may be LEDs. This circuit is an example of a circuit in which a number of LEDs is connected in a partially serial and partially parallel layout. Such a circuit offers several advantages. It permits the diodes **25** to be connected to either a DC or an AC power supply **23.** The voltage of the power supply may be much higher than the operating voltage of the LEDs. In fact, the circuit may be connected to the power mains, or to a power generator, without requiring a transformer or step-down circuitry. Another advantage of the circuitry is that, different from a circuit connecting LEDs in series, the circuit continues to produce light even if one of the LEDs fails.

In another aspect the invention relates to an enclosure for growing plants, said enclosure comprising:
a) a transparent panel for admitting daylight into the enclosure;
b) a first light source provided inside the enclosure for supplementing the daylight admitted into the enclosure, said light source emitting light predominantly in a wavelength range of from 600 nm to 750 nm;
c) a second light source inside the enclosure, said second light source emitting light predominantly in a second wavelength range of 375 to 500 nm; and
d) a controller for controlling the output of the second light source independent from the output of the first light source.

Examples of such an enclosure include greenhouses for growing decorative plants, food crops, or energy crops; enclosed stadiums with natural turf; atriums of office buildings and hotels, which may contain decorative plants, and the like. It will be understood that the term "enclosure" does not necessarily require a structure that is entirely closed, or that is entirely closed at all times. For example, greenhouses generally have windows that may be opened to provide ventilation and/or cooling. A stadium may have a retractable roof, which may be opened to allow air and light to enter.

In many cases the transparent panel will be made of glass, but other transparent materials may be used. It will be understood that a panel may be treated to reduce the transmission of infrared radiation, and even visible light. For example, glass panels of a green house may be coated or white-washed so as to temper sunlight reaching the plants. The glass panels of an atrium may be tinted or otherwise treated to reduce the amount of uv light and/or visible light entering the building. For the purpose of this invention, the term "transparent" connotes the property of transmitting daylight. Accordingly, the term encompasses "translucent" and other, similar terms.

It will be understood also that the function of the transparent panels is to admit daylight to the enclosure. Accordingly, the term "transparent panel" also encompasses an opening, such as an open window or the opening left by the retracted roof of a stadium.

Under a wide variety of circumstances the daylight reaching plants present in the enclosure provides all of the plants' needs of blue light, as it has been found that plants in general require only modest amounts of blue light.

Either or both light sources may comprise at least one LED. Suitable red LEDs and blue LEDs are exemplified above. Preferred for use as the red LED is an AlInGaP chip. If LED light sources are used, it is desirable to provide a cooling means in order to optimize the light output of the LEDs, while at the same time increasing their useful life. Desirably the cooling means comprises tube, e.g. a transparent tube, and a cooling fluid flowing through the tube. The tube may comprise a transparent housing, e.g. as schematically shown in FIG. 5. Heat may be recovered from the cooling fluid, and recycled into the enclosure.

As in this embodiment of the invention daylight is an important component of the light admitted to the plants, it is desirable to minimize the amount of daylight blocked by the tube, even if the tube is a transparent tube. Accordingly, the external diameter of the tube desirably is less than 5 cm, preferably less than 3 cm, more preferably less than 2 cm. For the same reason, it is desirable that the light sources have a limited size as well.

The LEDs may be mutually connected in a partially serial, partially parallel layout, e.g. in the form of a bridge circuit as shown in FIG. 6.

It is commonly believed that the light source should be positioned as closely above the plants as possible, to ensure the greatest possible light intensity. Although this principle may be correct for a single light source or a single row of light sources, it is not valid for an enclosure comprising a two-dimensional arrangement of light sources with a lambertian or planar radiation pattern.

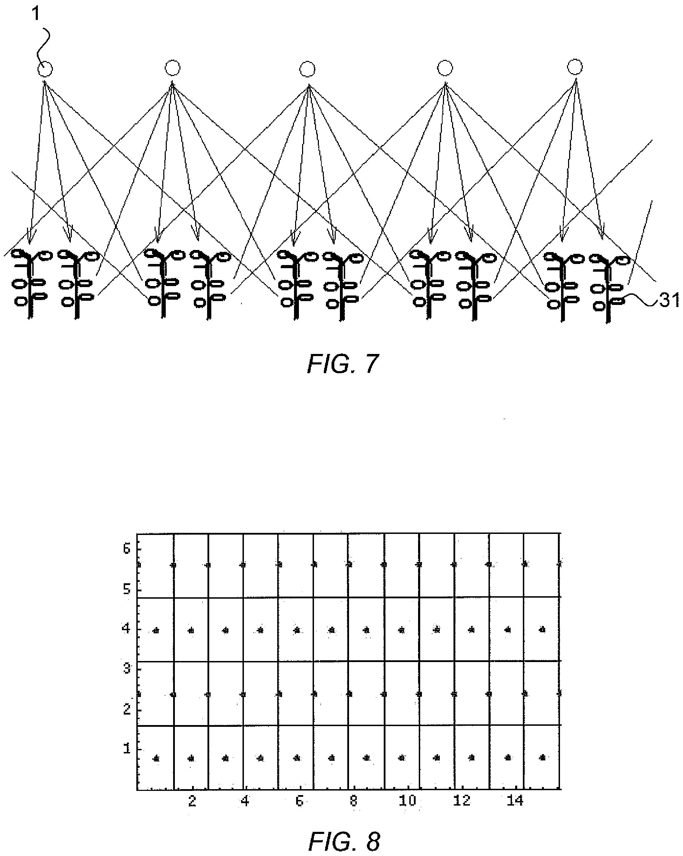

The light intensity decreases exponentially with the distance from the light assembly, not because of any losses, but because the light becomes spread across a greater surface as the distance from the lamp increases. If a two-dimensional grid of light assemblies **1** is suspended over a two-dimensional grid of plants **31,** each plant **31** receives light from several light assemblies **1.** This is illustrated in FIG. 7. Additionally, no light energy is lost if the distance from the light assembly grid to the plant grid is increased. The grid may provide optimal radiation uniformity over the entire two-dimensional grid of plants.

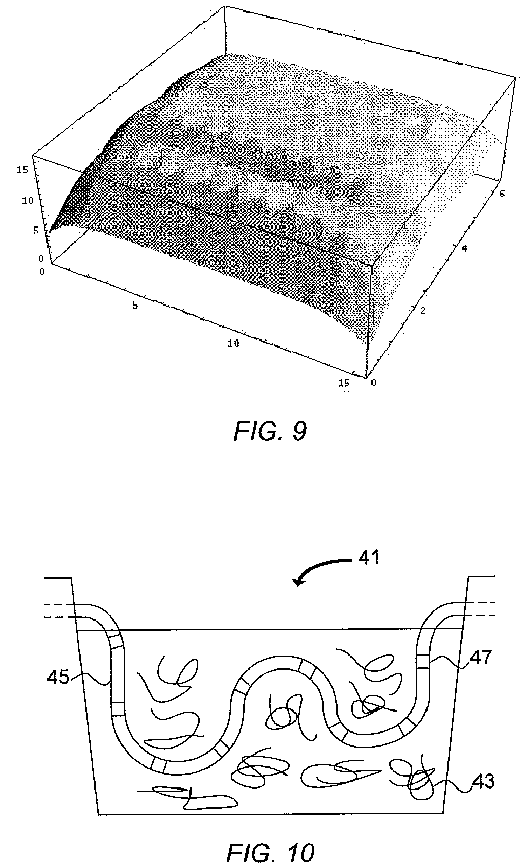

In one aspect, the invention relates to a grid of light assemblies suspended above a grid of plants at a distance of from 0.5 m to 10 m from the growth medium (a bed of soil, or rock wool, for example). Figure 8 shows an example if such a grid. FIG. 9 shows the light intensity pattern produced with the grid of FIG. 8.

Generally, conventional growth lamps, such as high pressure sodium (HPS) lamps are installed in an installation density such that more than 100 W/m² is emitted. The efficiency of the light assembly of the present invention is such that excellent results in terms of plant growth are obtained with emissions of from 15 to 40 W/m².

In yet another aspect the invention is a method of growing plants, said method comprising exposing the plants to daylight, to light emitted by a first light source predominantly in a wavelength range of from 600 to 750 nm, and to light from a second light source emitting light predominantly in a wavelength range of from 375 to 500 nm. The method further comprises controlling the output of the second light source independent from the output of the first light source.

In a preferred embodiment the method virtually avoids the use of artificial light in a wavelength range of from 500 to 600 nm.

Desirably, the first light source and the second light source each comprises at least one light emitting diode (LED).

The method further comprises cooling at least one of the light sources.

In one embodiment of the method the cooling comprises providing a tube, and a cooling liquid flowing through the transparent tube. Desirably, the tube comprises a transparent housing surrounding the light source. Furthermore, desirably, the tube has an external diameter of less than 5 cm, preferably less than 3 cm, more preferably less than 2 cm.

As explained above, the first light source may comprise an AlInGaP LED. The first light source may comprise a number of LEDs mutually connected, partially in series, partially in parallel, in a circuit.

The invention has been described by reference to certain embodiments discussed above. It will be recognized that these embodiments are susceptible to various modifications and alternative forms well known to those of skill in the art.

## Claims

1. An enclosure for growing plants, said enclosure comprising:
a) a transparent panel for admitting daylight into the enclosure a plurality of lighting assemblies for growing plants, wherein each lighting assembly comprises;
b) a first light source provided inside the enclosure for supplementing the daylight admitted into the enclosure, said light source emitting light predominantly in a wavelength range of from 600 nm to 750 nm;
c) a second light source inside the enclosure, said second light source emitting light predominantly in a second wavelength range of 375 to 500 nm; and
d) a controller for controlling the output of the second light source independent from the output of the first light source; and
e) a means for cooling at least the first light source, wherein the means for cooling comprises, a tube, and a cooling liquid flowing through the tube,
wherein said plurality of said light assemblies is arranged in a two-dimensional grid.

2. The enclosure of claim 1 wherein the tube comprises a transparent housing in which at least one of the light sources is placed.

3. The enclosure of claim 1 or 2, wherein the tube has an external diameter of less than 5 cm, preferably less than 3 cm, more preferably less than 2 cm.

4. The enclosure of any one of claims 1 through 3 wherein the first light source comprises an AIInGaP LED.

5. The enclosure of any one of claims 1 through 4 wherein the first light source comprises a number of LEDs partially serial, partially parallel connected in a circuit.

6. The enclosure of claim 1 wherein the two-dimensional grid emits light having an energy density of from 15 to 40 W/m².

7. A method of growing plants in an enclosure according to any of the previous claims, said method comprising: exposing the plants to daylight, to light emitted by a first light source predominantly in a wavelength range from 600 to 750 nm, and to light from a second light source emitting light predominantly in a wavelength range from 375 to 500 nm; controlling the output of the second light source independent from the output of the first light source, wherein said method further comprises cooling at least one of the light sources and wherein the cooling comprises providing a tube, and a cooling liquid flowing through the tube.

8. The method of claim 7 wherein the first light source and the second light source each comprises at least one light emitting diode (LED).

9. The method of claim 7 wherein the tube comprises a transparent housing in which at least one of the light sources is placed.

10. The method of claim 7 or 9, wherein the tube has an external diameter of less than 5 cm, preferably less than 3 cm, more preferably less than 2 cm.

11. The method of any one of claims 7 through 10 wherein the first light source comprises an AIInGaP LED.

12. The method of any one of claims 7 through 11 wherein the first light source comprises a number of LEDs partially serial, partially parallel connected in a circuit

## Patentansprüche

1. Anlage zum Anbauen von Pflanzen, die Anlageumfassend:
a) ein transparentes Paneel zum Einlassen von Tageslicht in die Anlage, eine Vielzahl von Beleuchtungsbaugruppen zum Anbauen von Pflanzen, wobei jede Beleuchtungsbaugruppe umfasst;
b) eine erste Lichtquelle, bereitgestellt im Inneren der Anlage zum Ergänzen des Tageslichts, eingelassen in die Anlage, die Lichtquelle emittierend Licht überwiegend in einem Wellenlängenbereich von 600 nm bis 750 nm;
c) eine zweite Lichtquelle im Inneren der Anlage, die zweite Lichtquelle emittierend Licht überwiegend in einem zweiten Wellenlängenbereich von 375 bis 500 nm; und
d) eine Steuereinheit zum Steuern der Ausgangsleistung der zweiten Lichtquelle unabhängig von der Ausgangsleistung der ersten Lichtquelle; und
e) Mittel zum Kühlen mindestens der ersten Lichtquelle, wobei das Mittel zum Kühlen eine Röhre, und eine Kühlflüssigkeit, fließend durch die Röhre, umfasst;
wobei die Vielzahl von Beleuchtungsbaugruppen in einem zweidimensionalen Raster angeordnet ist.

2. Anlage nach Anspruch 1, wobei die Röhre ein transparentes Gehäuse umfasst, in dem mindestens eine der Lichtquellen positioniert ist.

3. Anlage nach Anspruch 1 oder 2, wobei die Röhre einen äußeren Durchmesser von weniger als 5 cm , vorzugsweise weniger als 3 cm, bevorzugter weniger als 2 cm hat.

4. Anlage nach einem der Ansprüche 1 bis 3, wobei die erste Lichtquelle ein AIInGaP-LED umfasst.

5. Anlage nach einem der Ansprüche 1 bis 4, wobei die erste Lichtquelle eine Anzahl von LEDs, teilweise seriell, teilweise parallel in einem Stromkreis verbunden, umfasst.

6. Anlage nach Anspruch 1, wobei das zweidimensionale Raster Licht mit einer Energiedichte von 15 bis 40 W/m² emittiert.

7. Verfahren zum Anbauen von Pflanzen in einer Anlage, gemäß einem der vorhergehenden Ansprüche, das Verfahren umfassend: Aussetzen der Pflanzen dem Tageslicht, dem Licht, emittiert durch eine erste Lichtquelle überwiegend in einem Wellenlängenbereich von 600 bis 750 nm, und dem Licht von einer zweiten Lichtquelle, emittierend Licht überwiegend in einem Wellenlängenbereich von 375 bis 500 nm; Steuern der Ausgangsleistung der zweiten Lichtquelle unabhängig von der Ausgangsleistung der ersten Lichtquelle, wobei das Verfahren ferner Kühlen mindestens einer der Lichtquellen umfasst und wobei das Kühlen Bereitstellen einer Röhre, und einer Kühlflüssigkeit, fließend durch die Röhre , umfasst.

8. Verfahren nach Anspruch 7, wobei die erste Lichtquelle und die zweite Lichtquelle jeweils mindestens eine Licht-emittierende Diode (LED) umfasst.

9. Verfahren nach Anspruch 7, wobei die Röhre ein transparentes Gehäuse umfasst, in dem mindestens eine der Lichtquellen positioniert wird.

10. Verfahren nach Anspruch 7 oder 9, wobei die Röhre einen äußeren Durchmesser von weniger als 5 cm, vorzugsweise weniger als 3 cm, bevorzugter weniger als 2 cm hat.

11. Verfahren nach einem der Ansprüche 7 bis 10, wobei die erste Lichtquelle ein AIInGaP-LED umfasst.

12. Verfahren nach einem der Ansprüche 7 bis 11, wobei die erste Lichtquelle eine Anzahl von LEDs, teilweise seriell, teilweise parallel in einem Stromkreis verbunden, umfasst.

## Revendications

1. Enceinte pour la croissance de plantes, ladite enceinte comprenant :
a) un panneau transparent pour admettre la lumière du jour dans l'enceinte et une pluralité d'assemblages d'éclairage pour la croissance de plantes, chaque assemblage d'éclairage comprenant :
b) une première source de lumière disposée à l'intérieur de l'enceinte pour complémenter la lumière du jour admise dans l'enceinte, ladite source de lumière émettant une lumière principalement dans la gamme de longueurs d'onde allant de 600 nm à 750 nm ;
c) une deuxième source de lumière à l'intérieur de l'enceinte, ladite deuxième source de lumière émettant une lumière principalement dans une deuxième gamme de longueurs d'onde allant de 375 à 500 nm ; et
d) un contrôleur pour commander la sortie de la deuxième source de lumière indépendamment de la sortie de la première source de lumière ; et
e) un moyen pour refroidir au moins la première source de lumière, dans lequel le moyen de refroidissement comprend un tube et un liquide réfrigérant circulant dans le tube,
dans laquelle ladite pluralité desdits assemblages de lumière est agencée selon une grille bidimensionnelle.

2. Enceinte selon la revendication 1, dans laquelle le tube comprend un logement transparent dans lequel au moins l'une des sources de lumière est placée.

3. Enceinte selon la revendication 1 ou 2, dans laquelle le tube a un diamètre externe inférieur à 5 cm, de préférence inférieur à 3 cm, mieux encore inférieur à 2 cm.

4. Enceinte selon l'une quelconque des revendications 1 à 3, dans laquelle la première source de lumière comprend une DEL à l'AlInGaP.

5. Enceinte selon l'une quelconque des revendications 1 à 4, dans laquelle la première source de lumière comprend un certain nombre de DEL connectées partiellement en série et partiellement en parallèle dans un circuit.

6. Enceinte selon la revendication 1, dans laquelle la grille bidimensionnelle émet une lumière ayant une densité énergétique de 15 à 40 W/m².

7. Procédé pour faire pousser des plantes dans une enceinte selon l'une quelconque des revendications précédentes, ledit procédé comprenant : l'exposition des plantes à la lumière du jour, à une lumière émise par une première source de lumière principalement dans la gamme de longueurs d'onde allant de 600 à 750 nm, et à une lumière provenant d'une deuxième source de lumière émettant une lumière principalement dans la gamme de longueurs d'onde de 375 à 500 nm ; la commande de la sortie de la deuxième source de lumière indépendamment de la sortie de la première source de lumière, dans lequel le procédé comprend en outre le refroidissement d'au moins l'une des sources de lumière, dans lequel le refroidissement comprend la disposition d'un tube et d'un liquide de refroidissement circulant dans le tube.

8. Procédé selon la revendication 7, dans lequel la première source de lumière et la deuxième source de lumière comprennent chacune au moins une diode luminescente (DEL).

9. Procédé selon la revendication 7, dans lequel le tube comprend un logement transparent dans lequel au moins l'une des sources de lumière est placée.

10. Procédé selon la revendication 7 ou 9, dans lequel le tube a un diamètre externe inférieur à 5 cm, de préférence inférieur à 3 cm, mieux encore inférieur à 2 cm.

11. Procédé selon l'une quelconque des revendications 7 à 10, dans lequel la première source de lumière comprend une DEL à l'AlInGaP.

12. Procédé selon l'une quelconque des revendications 7 à 11, dans lequel la première source de lumière comprend un certain nombre de DEL connectées partiellement en série et partiellement en parallèle dans un circuit.
